# EUROPEAN PATENT APPLICATION

(11) **EP 1 001 597 A2**
(43) Date of publication of application: **17.05.2000**
(21) Application number: 99480069.6
(22) Date of filing: 29.07.1999
(51) Int. Cl.: H04M 7/00, H04M 3/523

(54) **Method and system for reducing telephone costs for calls to service providers**

(30) Priority: 10.11.1998 EP 98480074
(71) Applicant: INTERNATIONAL BUSINESS MACHINES CORPORATION, Armonk, NY 10504 (US)
(72) Inventor: Medan, Yoav, Haifa (IL)
(74) Representative: Etorre, Yves Nicolas

(57) **Abstract**

A method and system for reducing an overall per unit cost of telephone calls directed by a subscriber to a receiving party. A low-cost data communications line, such as the Internet, is provided in parallel with a public telephone network, and the telephone call is routed through whichever of the data communications line and the telephone network is less expensive. The invention finds particular application for reducing an overall per unit cost of telephone calls directed by a subscriber to a receiving party via an Automatic Call Distribution system (ACD). In such an application an Interactive Voice Response system (IVR) is provided local to the subscriber for receiving a customer request via a regular telephone line at a low tariff. A request for attention is directed from the IVR via a low-cost data communications line to the (ACD) for maintaining therein a queue of calls awaiting attention. The ACD informs the IVR when the request reaches a predetermined place in the queue, and re-routes the call from the IVR to the ACD via the regular telephone line.

## Description

### FIELD OF THE INVENTION

This invention relates to the provision of services via the telephone.

### BACKGROUND OF THE INVENTION

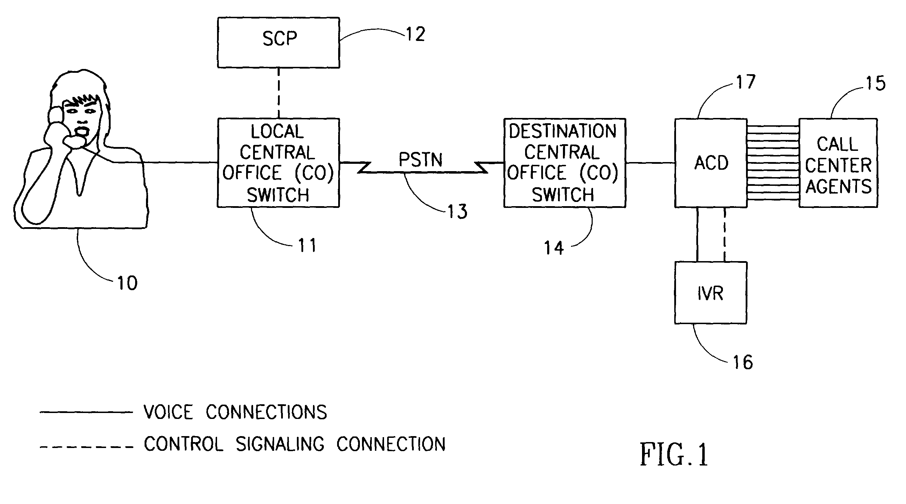

With the advent of Computer Telephone Integration, it has become common for service providers of various kinds to provide toll-free service numbers and handle inquiries using an Interactive Voice Response (IVR) system. Fig. 1 shows a typical known Advanced Intelligent Network (AIN) for routing a subscriber's service inquiry via a toll-free number. On dialing a toll-free service number, the calling party 10 is switched by a Local Central Office Switch 11 to a Service Control Point (SCP) 12 common to many service providers. The Service Control Point 12 cross-references the dialed number in a lookup table and processes the call based on the lookup table data. The lookup table may return an actual number to which the call is actually connected via the PSTN 13 to a Remote Central Office Switch 14.

Most calls of this kind terminate in a Call Center 15 that either provides some kind of product support or service sale. Typically, the calling party 10 is provided with an Interactive Voice Response 16 in the form of a vocal menu presenting various enumerated options. The subscriber can select a desired option by pressing one or more buttons on her telephone keypad. By such means, the initial handling of a subscriber's inquiry can be automated, thus saving personnel costs to the service provider.

After accepting the user inquiry, the IVR 16 transfers control of the call to an Automatic Call Distribution point (ACD) 17. The ACD 17 fields the subscriber's inquiry and then internally directs the call to whichever customer service representative is best qualified to deal with it. If the customer service representative is busy, the inquiry is added to a queue of pending calls to a group of customer service representatives, any one of whom is suitable for providing the requested service. When this happens, the subscriber is frequently put "on hold" until one of the internal lines to a suitable customer service representative becomes free. This may take some considerable time depending, for example, on the number of subscribers waiting for the same customer service representative, the number of service representatives qualified to handle the inquiry and the time duration of each inquiry. A typical average time for initial processing of the subscriber's inquiry by the Interactive Voice Response is up to one minute; whilst the subscriber may then wait several minutes before being connected to the correct destination.

Obviously, insofar as the subscriber has to wait idle in a queue before her inquiry can be handled by the service provider, increased connection costs are to be expected in proportion to the waiting time. However, it is irksome that these "waiting" costs are based on a high tariff commensurate with the long distance connection and it would be a significant improvement to the billed party, typically the service provider, if these costs could be reduced.

### SUMMARY OF THE INVENTION

It is therefore an object of the invention to provide a method and system for reducing an overall per unit cost of telephone calls directed to a receiving party via an Automatic Call Distribution system (ACD).

This object is realized in accordance with a specific implementation of the invention by:
**(a)** locating an Interactive Voice Response system (IVR) local to the subscriber for receiving a customer request via a regular telephone line at a low tarif,
**(b)** directing a request for attention from the IVR via a low-cost data communications line to the (ACD) for maintaining therein a queue of calls awaiting attention,
**(c**) the ACD informing the IVR when the request reaches a predetermined place in the queue, and
**(d**) re-routing the call from the IVR to the ACD via the regular telephone line.

At a more fundamental level the inventive concept resides in the realization that any telephone call comprises a request signal which awakens or alerts the receiving party, and the media constituting the content of the message to be conveyed, and that these need not be routed along the same channel. Specifically, a data communications network such as the Internet may be used in parallel with a regular telephone line so as to route the request signal which does not require a high quality communications line, whilst routing the media, when this requires a high quality communications line, through the regular telephone line.

In the invention this finds expression in step **(b)** which signals to the receiving party whilst only in step **(d)** is the actual data conveyed to the receiving party. That is to say, initially signaling is conveyed from the local IVR to the ACD via the data communications network whilst the media is routed via the regular telephone network only when the receiving party indicates that it is ready (or nearly ready) to receive the media. During the time between initiating the signal to the local IVR in step **(b)** and the media being conveyed to the ACD in step **(d)**, the subscriber is kept "on hold". However, the costs of maintaining the connection between the subscriber and the receiving party are low because during this time interval, which can be several minutes, the request signal is conveyed through the low-cost data communications network.

In this respect, the invention can be reduced to the following steps:
**(a)** providing a low-cost data communications line in parallel with a public telephone network,
**(b)** identifying within the telephone call a request signal for alerting the receiving party, and a media portion, and
**(c)** routing the request signal and the media portion independently through whichever of the data communications line and the telephone network is less expensive.

Preferably, the receiving party is a remote service provider to whom access is provided via a local low-cost or toll-free number. The connection between the Service Control Point and the service provider being generally long distance is subject to a higher tariff. The invention therefore allows an alternative connection via a data network (typically the Internet) pending availability of the service provider, whereupon normal connection over the telephone is provided. Since the cost of this connection is borne by the service provider, this achieves an immediate cost-benefit to the service provider. However, ultimately the calling party also benefits since the cost of the connection from the IVR to the ACD is inevitably reflected in the service costs of the service provider.

These costs can be further reduced by exploiting the low-cost connection between the calling party and the IVR, to play local commercials whose revenue may be used to subsidize the telephone costs.

Thus, owing to the proximity of the IVR to the customer, service calls are initially handled via low-cost, local calls. Whether the costs are borne directly by the service provider or by the subscriber, in either case, the subscriber benefits since the "toll-free" costs of the service provider are inevitably reflected in his tariff. Thereafter, once the call is re-directed to the Service Provider, the connection may be subject to a high tariff commensurate with the extended distance over which the connection is now routed.

Typically, the low-cost communication line is part of the Internet allowing even long distance telephone calls to be routed for the unit cost of a local call. As is known, the Internet is not suited to speech communication in real-time, owing to the limited bandwidth of the Internet. This approach is feasible when the calling party does not need to converse vocally with the receiving party, as is the case whilst the subscriber is waiting for attention. During this waiting period, the calling party is not connected with the receiving party but only with the IVR. Thereafter, connection is effected over the regular telephone line when normal conversations can be maintained.

### BRIEF DESCRIPTION OF THE DRAWINGS

In order to understand the invention and to see how it may be carried out in practice, some preferred embodiments will nobe described, by way of non-limiting example only, with reference to the accompanying drawings, in which:
**Fig. 1** is a block diagram showing functionally a typical prior art telephone system for routing service inquiries via a toll-free number;
**Fig. 2** is a block diagram showing functionally a telephone system according to the invention for routing service inquiries via a toll-free number; and
**Figs. 3a and 3b** are a flow diagram showing the principal operating steps associated with various configurations of the system shown in Fig. 2.

### DETAILED DESCRIPTION OF PREFERRED EMBODIMENTS

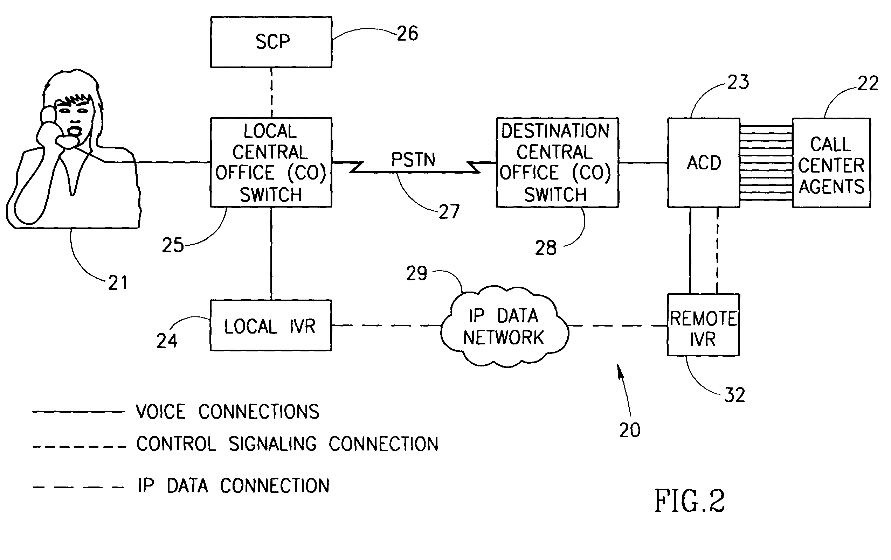

Fig. 2 shows functionally a system 20 for reducing an overall per unit cost of telephone calls directed by a subscriber 21 (constituting a "calling party") to a Call Center 22 (constituting a "receiving party") via an Automatic Call Distribution system (ACD) 23. The system 20 comprises a local Interactive Voice Response system (IVR) 24 connected to the subscriber via a Local Central Office Switch 25. As in known systems, the Local Central Office Switch 25 allows access to a Service Control Point (SCP) 26 for translating the dialed toll-free number to an actual number which is automatically dialed so as to route the subscriber's call over the PSTN 27 to the ACD 23 via a Remote Central Office Switch 28. The PSTN 27 constitutes a "regular telephone line" for allowing the subscriber's call to be handled as a regular telephone call at normal tariffs. However, since the subscriber 21 makes initial contact to the local IVR 24, the initial handling of the inquiry is a "local call" subject to a low tariff even though the Call Center 22 may be remote from the subscriber 21 and require a "trunk call".

In parallel with the PSTN 27 there is also provided an IP Data Network 29 (e.g. the Internet) constituting "a low-cost data communications line" which is switched to the Local IVR 24 via the Local Central Office Switch 25. The IP Data Network 29 directs a request for attention from the local IVR 24 to the (ACD) 23 for maintaining therein a queue of calls awaiting attention. The IP Data Network 29 further directs a call transfer request signal from the ACD 23 to the local IVR 24 when the request reaches a predetermined place in the queue. The Local Central Office Switch 25 is responsive to the call transfer request signal for re-routing the call from the local IVR 24 to the ACD 23 via the PSTN 27.

Optionally, a remote IVR 30 may be connected to the ACD 23 for communicating with the local IVR 24 via the IP Data Network 29. In such case, the local IVR 24 connects, at low cost, via the IP Data Network 29 to an Internet site of the receiving party. Instead of providing the conventional voice response, there may now be downloaded to the subscriber from the Internet site of the receiving party a menu for selecting a desired extension. Upon selection of a desired extension, a "connect request message" is sent via the remote IVR 30 to the Call Center 22, and the "connect request message" is queued until the desired extension becomes available. Alternatively, the visual display menu may converted to an IVR script for vocalizing to the subscriber 21. In either case, communication to the subscriber 21 is at low cost through the IP Data Network 29.

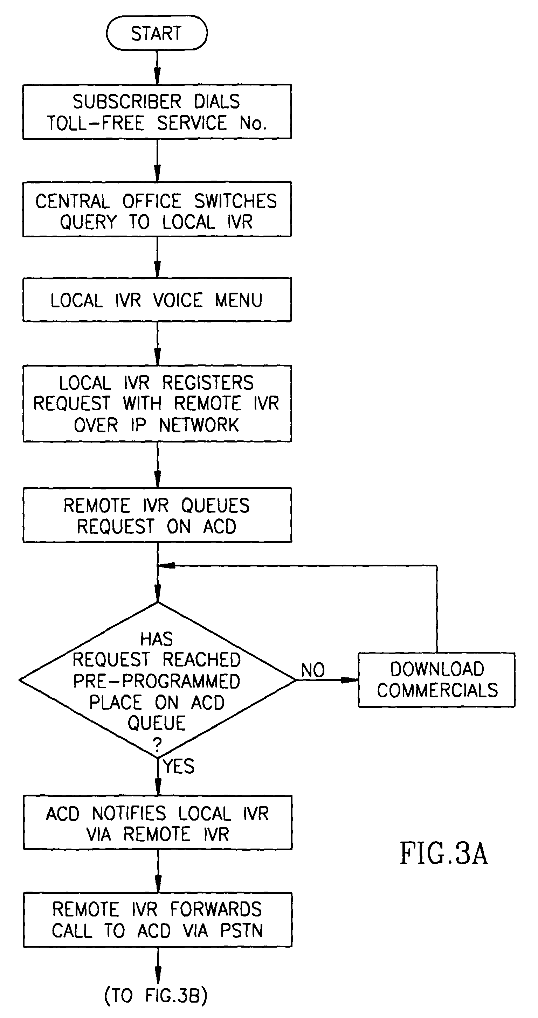

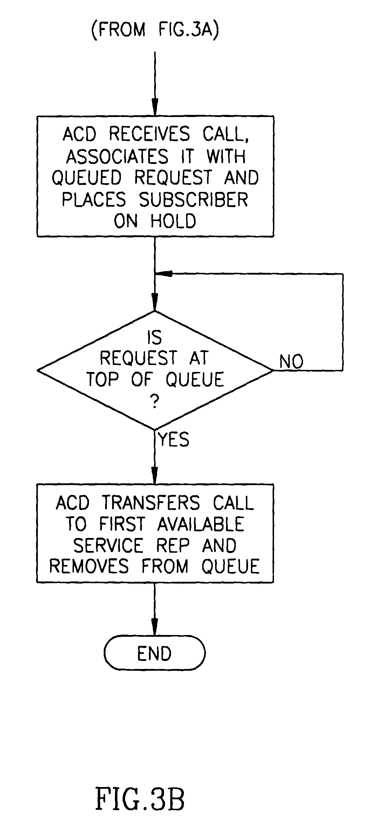

Figs. 3a and 3b show the principal operating steps associated with the system 20. Thus, the subscriber's call is routed to the local IVR 24 which directs a request for attention via the IP Data Network 29 to the ACD 23 for maintaining therein a queue of calls awaiting attention. When the request reaches a predetermined place in the queue, the ACD 23 informs the IVR 24, and the call is re-routed from the IVR 24 to the ACD 23 via the PSTN 27 at the normal tariff.

Typically, upon receiving the subscriber's inquiry, the ACD 23 associates the call with the respective request, and places the subscriber on hold. When the request becomes the first in the queue, the ACD 23 transfers the call to the Call Center 22, and removes the request from the queue.

It is thus clear that, prior to the time that the subscriber's request has reached the pre-programmed place on the ACD queue, the subscriber is subjected only to the low tariff associated with connection to the IP Data Network 29. These costs can themselves be subsidized by sending commercials from the local IVR 24 to the subscriber 21 pending connection to the Call Center 22.

Although some specific embodiments have been described, it will be appreciated that further variations can be made without departing from the scope of the invention as defined in the appended claims. In particular, it is to be understood that the invention resides in the realization that a low-cost data communications network, such as the Internet, may be used in parallel with a regular telephone line so as to re-route a service request prior to its receiving attention by a remote party. More generally, the use of two parallel communication lines allows calls to be routed through whichever of the two lines is the less expensive.

In the method claims which follow, alphabetic characters used to designate claim steps are provided for convenience only and do not imply any particular order of performing the steps.

## Claims

1. A method for reducing an overall per unit cost of telephone calls directed by a subscriber to a receiving party, said method comprising the steps of
(a) providing a low-cost data communications line in parallel with a public telephone network,
(b) identifying within the telephone call a request signal for alerting the receiving party and a media portion, and
(c) routing the request signal and the media portion independently through whichever of the data communications line and the telephone network is less expensive.

2. A method according for reducing an overall per unit cost of telephone calls directed by a subscriber to a receiving party via an Automatic Call Distribution system (ACD), said method comprising the steps of:
a) locating an Interactive Voice Response system (IVR) local to the subscriber for receiving a customer request via a regular telephone line at a low tariff,
b) directing a request for attention from the IVR via a low-cost data communications line to the ACD for maintaining therein a queue of calls awaiting attention,
c) the ACD informing the IVR when the request reaches a predetermined place in the queue, and
d) re-routing the call from the IVR to the ACD via the regular telephone line.

3. The method according to Claim 2, including the further steps carried out by the ACD:
(e) associating the call with the respective request,
(f) placing the subscriber on hold, and
(g) when the request becomes first in the queue, transferring the call to the receiving party, and
(h) removing the request from the queue.

4. The method according to Claim 2, wherein step (a) includes:
(i) identifying the ACD by a local access number, and
(ii) cross-referring the local access number to a remote access number identifying the receiving party.

5. The method according to Claim 4, wherein the remote access number is an Internet URL.

6. The method according to Claim 2, wherein step (b) includes the steps of:
(i) connecting at low cost to an Internet site of the receiving party,
(ii) downloading to the subscriber from the Internet site of the receiving party a menu for selecting a desired extension,
(iii) upon selection of a desired extension, sending a connect request message to the call center, and
(iv) queuing the connect request message until the desired extension becomes available.

7. The method according to claim 6, wherein step (iv) includes:
(1) accessing a visual display menu from the Internet site of the receiving party, and
(2) converting the visual display menu to an IVR script for vocalizing to the calling party.

8. The method according to claim 2, wherein there is further included prior to step (b) the step of:
(i) sending commercials from the IVR to the subscriber so as to subsidize a connection cost between the IVR and the subscriber pending connection to the receiving party.

9. Use of two parallel communication lines for routing signaling and media components of a telephone call independently through whichever of the two communication lines is the less expensive commensurate with maintaining quality.

10. A system for reducing an overall per unit cost of telephone calls directed by a subscriber to a receiving party, said system comprising:
(a) a low-cost data communications line in parallel with a public telephone network, and
(b) a switch for routing the telephone call through whichever of the data communications line and the telephone network is less expensive.

11. The system according for reducing an overall per unit cost of telephone calls directed by a subscriber to a receiving party via an Automatic Call Distribution system (ACD), said system comprising:
(a) an Interactive Voice Response system (IVR) connected to the subscriber for receiving a customer request via a regular telephone line at a low tariff,
(b) a low-cost data communications line for directing a request for attention from the IVR to the (ACD) for maintaining therein a queue of calls awaiting attention,
(c) said low-cost data communications line further for directing a call transfer request signal from the ACD to the IVR when the request reaches a predetermined place in the queue, and
(d) a switch responsive to the call transfer request signal for re-routing the call from the IVR to the ACD via the regular telephone line.

12. The system according to Claim 11, wherein the ACD is further configured for:
(e) associating the call with the respective request,
(f) placing the subscriber on hold, and
(g) when the request becomes first in the queue, transferring the call to the receiving party, and
(h) removing the request from the queue.

13. The system according to Claim 11, wherein step (a) includes:
(i) identifying the ACD by a local access number, and
(ii) cross-referring the local access number to a remote access number identifying the receiving party.

14. The system according to Claim 13, wherein the remote access number is an Internet URL.

15. The system according to Claim 11, wherein the IVR is configured for:
(i) connecting at low cost to an Internet site of the receiving party,
(ii) downloading to the subscriber from the Internet site of the receiving party a menu for selecting a desired extension,
(iii) upon selection of a desired extension, sending a connect request message to the call center, and
(iv) queuing the connect request message until the desired extension becomes available.

16. The system according to Claim 11, wherein the IVR includes:
a Web browser for accessing a visual display menu from the Internet site of the receiving party, and
a converter for converting the visual display menu to an IVR script for vocalizing to the calling party.

17. The system according to Claim 11, wherein the IVR further includes:
a memory storing commercials therein, and
a processor coupled to the memory for sending commercials to the subscriber so as to subsidize a connection cost between the IVR and the subscriber pending connection to the receiving party.
